# NEUE EUROPÄISCHE PATENTSCHRIFT

(11) **EP 1 136 425 B2**
(45) Veröffentlichungstag und Bekanntmachung des Hinweises auf die Entscheidung über den Einspruch: **30.09.2009**
(45) Hinweis auf die Patenterteilung: 30.08.2006
(21) Anmeldenummer: 01105371.7
(22) Anmeldetag: 09.03.2001
(51) Int. Cl.: B66F 9/075, B62D 33/10, B62D 33/06

(54) **Bedienerplatz für mobile Arbeitsmaschinen**
Cab for mobile working machines
Cabine pour machines de travail mobiles

(30) Priorität: 17.03.2000 DE 10013070
(43) Veröffentlichungstag der Anmeldung: 26.09.2001
(73) Patentinhaber: STILL GmbH, 22113 Hamburg (DE)
(72) Erfinder: Bavendiek, Rainer, Dr. Dipl.-Ing., 21465 Wentorf (DE); Scharr, Dirk, Dipl.-Ing., 22083 Hamburg (DE); Tödter, Joachim, Dipl.-Ing., 22941 Bargteheide (DE)
(74) Vertreter: Geirhos, Johann

(56) Entgegenhaltungen:
- EP-B- 1 202 869
- WO-A-91/04221
- DE-A- 4 313 973
- DE-A- 4 321 152
- DE-A- 4 441 200
- US-A- 5 727 440
- US-A- 5 899 288

## Beschreibung

Die Erfindung betrifft einen Gabelstapler nach dem Oberbegriff des Anspruchs 1.

Ein derartiger Gabelstapler ist in der WO-A-91/04-221 offenbart.

Bediener von mobilen Arbeitsmaschinen sind häufig einer nennenswerten Schwingungsbelastung ausgesetzt, weil diese Geräte nicht mit einer Federung ausgerüstet sind. Insbesondere Gabelstapler haben normalerweise zwischen Fahrwerk und Chassis keine Federelemente. Beim Überfahren von Unebenheiten können Ganzkörperschwingungen auf den Fahrer übertragen werden. Diese werden dann nur durch den Fahrersitz gedämpft. Bekannt ist die Lagerung des Bedienplatzes in Gummimetalllagem, was zwar zu einer Verringerung der Schwingungsbelastung führt, aber immer noch wesentlich mehr Belastungen für den Fahrer "durchläßt", als wünschenswert ist.

Bei Lastkraftwagen oder Ackerschleppem haben sich inzwischen gefederte Kabinen durchgesetzt.

Aus der Zeitschrift Noise & Vibration Worldwide, November 1997, Seiten 17 bis 26, ist eine wissenschaftliche Arbeit über die Entwicklung von gefederten Arbeitsplätzen für Gabelstapler bekannt. Auf Seite 22 ist in der rechten Spalte der Ersatz der vier Gummimetalllager, die normalerweise die Kabine mit Chassis verbinden, durch vier Metallfedern und Dämpferelemente vorgeschlagen. Eine Ausführung dieser Lagerung ist auf Seite 24 in Figur 5 gezeigt. Die dort vorgeschlagene Aufhängung dämpft die Schwingungen, die auf den Fahrerarbeitsplatz eingeleitet werden, deutlich. Wünschenswert wäre jedoch eine weitergehende Dämpfung der Stoßbelastung.

Aufgabe der Erfindung ist es daher, einen Gabelstapler vorzuschlagen, bei dem die Stoßbelastung des Bedienerarbeitsplatzes nochmals verringert ist.

Diese Aufgabe wird erfindungsgemäß von einem Gabelstapler mit den Merkmalen des Anspruchs 1 gelöst.

In der Fluidleitung zwischen dem Zylinder und dem Speicherelement ist eine einstellbare Drossel vorgesehen, wobei dann das System aus Zylinder, Speicher und Drossel ein Feder-Masse-Dämpfersystem darstellt, bei dem die Federsteifigkeit über den Vorspanndruck der Speichereinheit und die Dämpfung über den Querschnitt der Drossel einstellbar sind. Dieses Feder-Masse-Dämpfungssystem kann durch Verändern des Vorspanndruckes und des Drosselquerschnitts an die unterschiedlichsten Kabinenausführungen oder an unterschiedliche Fahrergewichte angepaßt werden. Der Bedienplatz kann sich dann beispielsweise mehrere Millimeter oder Zentimeter auf- und abbewegen und wird durch das genannte System effektiv gefedert.

Die erfindungsgemäße Verwendung einer pneumatischen oder hydropneumatischen Federung reduziert die Schwingungsbelastung für den Bediener deutlich. Der Komfort beim Fahren der Arbeitsmaschine wird wesentlich gesteigert. Es sind weniger Erkrankungen in Folge von Wirbelsäulenschädigungen zu erwarten. Ebenso ist eine Steigerung der Umsatzleistung durch ein größeres Wohlbefinden der Bediener zu erwarten.

In einer Ausführungsform der Erfindung wird der Bedienerplatz - oder die Fahrerkabine - in vertikaler Richtung von Führungselementen geführt und ist auf einem, zwei oder mehreren mit einem oder zwei Fluiden gefüllten Zylindern abgestützt. Als Führungselemente können entweder klassische Linearführungen wie Schlittenführungen, Rollenführungen, Kugelumlaufführungen, Schwalbenschwanzführungen oder Hubgerüstführungen verwendet werden. Wenn der Verfahrweg nicht besonders lang ist, reichen auch Führungen aus Blattfedern oder über bewegliche Arme, wie sie z.B. aus Scherengittern bekannt sind. Ebenso sind Führungen an Hebeln oder Lenkern einsetzbar, wie sie in reicher Auswahl aus der Gestaltung von gefederten Fahrwerken von Fahrzeugen bekannt sind. Das Fluid ist mittels einer einstellbaren Blasenspeichereinheit vorgespannt. Der Vorspanndruck kann auf gewünschte Werte voreingestellt werden und so dem Gewicht des Fahrers angepaßt werden. Die Verwendung einer hydropneumatischen Federung erlaubt auch eine Höhenverstellung der Kabine und empfiehlt sich insbesondere für Gabelstapler, da in diesen Fahrzeugen sowieso schon eine Hydraulikpumpe vorhanden ist, die für den ausreichenden Hydraulikdruck sorgt.

Die aktive Regelung des Federungssystems umfasst eine Sensorik in der Maschine und kann damit den Betriebszustand registrieren, und eine Regelung stellt permanent die optimalen Parameter für das Federungssystem (Vorspanndruck und Drosselquerschnitt) ein. Dies erhöht nochmals den Fahr- oder Bedienkomfort des Fahrzeugs.

Weitere Vorteile und Merkmale ergeben sich aus der Beschreibung eines Ausführungsbeispiels der Erfindung anhand dreier Figuren.

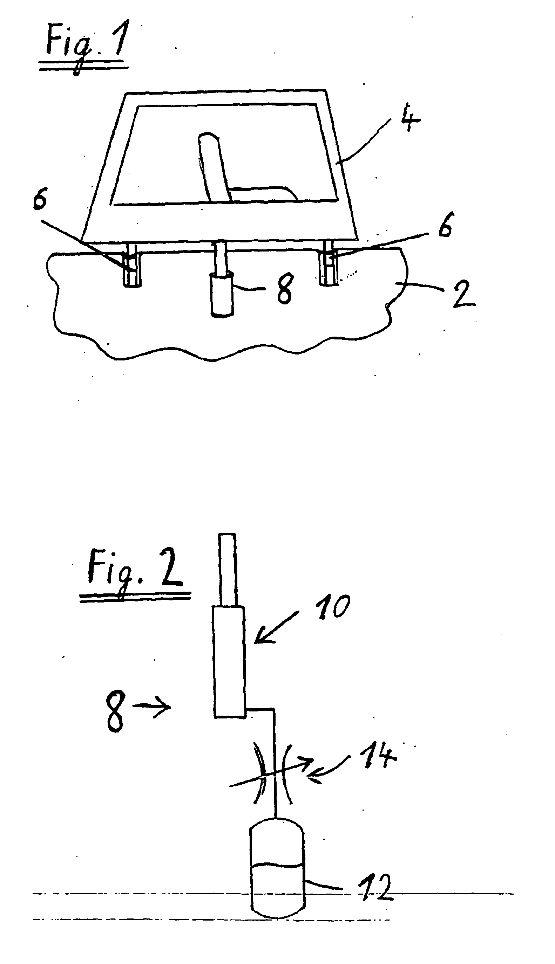

Die Figur 1 zeigt schematisch einen Teil eines Chassis 2 eines Gabelstaplers mit einem Bedienplatz 4, der den Fahrersitz enthält. Ein solcher Bedienplatz 4 wird regelmäßig als Fahrerkabine ausgebildet sein, um den Fahrer vor herabfallenden Lasten oder beim Umkippen des Fahrzeugs zu schützen. Der Bedienplatz 4 ist in dieser Ausführung über Führungselemente 6 höhenbeweglich gegenüber dem Chassis 2 gelagert. Das Gewicht des Bedienplatzes 4 wird von dem Federelement 8 aufgenommen, welches hier mittig zum Bedienplatz 4 angeordnet ist. Dieses pneumatische oder hydropneumatische Federelement erlaubt also die Dämpfung von Schwingungen, die vom Fahrwerk des Chassis 2 ansonsten ungefedert auf den Bedienplatz 4 übergeleitet würden.

In Figur 2 ist eine genauere Darstellung des Federelements 8 einer hydropneumatischen Federung gezeigt. Das Federelement 8 besteht hier im wesentlichen aus dem Zylinder 10, dessen Kolben die Kabine 4 trägt, einer Speichereinheit 12 mit einem einstellbaren Vorspanndruck und einer Fluidleitung zwischen Zylinder 10 und Speicherelement 12. In dieser Fluidleitung ist ein einstellbares Drosselelement 14 vorgesehen. Das Speicherelement 12 enthält in seinem inneren eine elastische Membran, z.B. aus Gummi, die ein inkompressibles Fluid, wie z.B. Öl, von einem kompressiblen Fluid, wie Luft, trennt. Das kompressible Fluid befindet sich hier in der unteren Hälfte des Speicherelements 12. Das inkompressible Fluid füllt die andere Hälfte des Speicherelements 12, die Fluidleitung und zum Teil den Zylinder 10. Stoßbelastungen, die durch Überfahren von Unebenheiten auf das Chassis 2 wirken, werden von dem Luftpolster im Speicherelement 12 elastisch abgefangen. Der Kolben des Zylinders 10 gibt den Stoß nur stark gedämpft an den Bedienplatz 4 weiter.

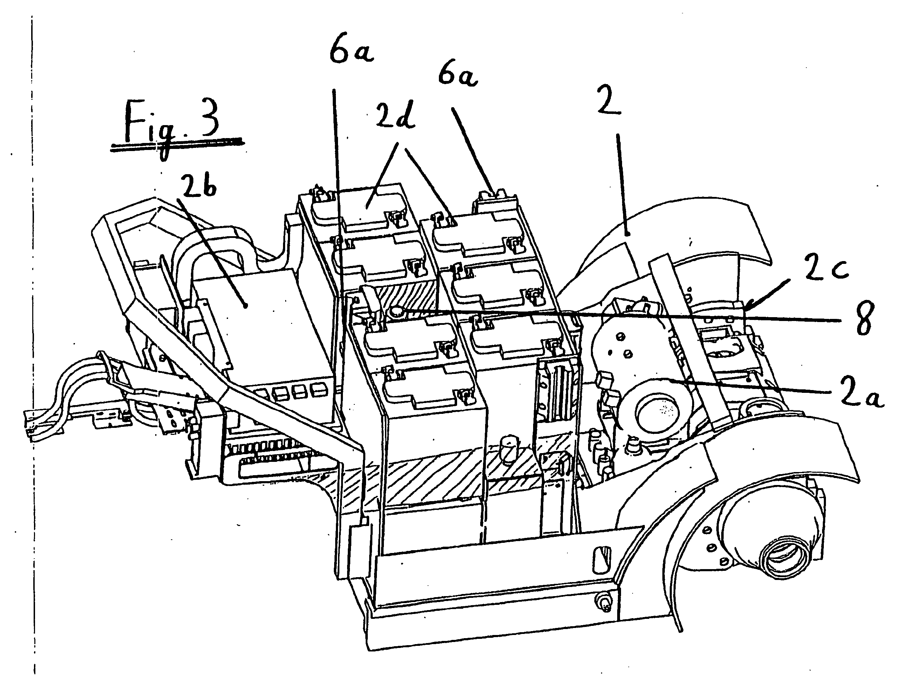

Figur 3 zeigt ein Chassis 2 eines Gabelstaplers, der mit der erfindungsgemäßen Kinematik ausgestattet ist. Das Chassis 2 enthält hier den Elektromotor 2a, die Steuerelektronik 2b, Befestigungselemente 2c für das Hubgerüst und mehrere Batterien 2d. Erfindungsgemäß sind nun Schlittenführungen 6a vorgesehen, hier zwei links und rechts in der Nähe der Vorderräder und eine dritte mittig hinten. In diese Schlittenelemente greifen die Führungsstangen, die an dem Bedienerplatz 4 nach unten hinausragend angeordnet sind. Bei aufgesetztem Bedienplatz 4 ist dieser also gegenüber dem Chassis 2 vertikal höhenverstellbar. Zum Tragen der Last der Kabine oder des Bedienerplatzes ist das Federelement 8 vorgesehen. Es ist hier direkt neben dem Führungselement 6a angeordnet und in ganz unten geschobenem Zustand gezeigt. Bei Vorspannung mittels Hydraulikflüssigkeit fährt der Zylinder im Federelement 8 hoch und trägt damit das Gewicht des aufgesetzten Bedienerplatzes 4.

## Patentansprüche

1. Gabelstapler, mit einem Chassis (2) und einem daran angeordneten Bedienerplatz (4), mit einem oder mehreren pneumatischen oder hydropneumatischen Federelementen (8), mit einem oder mehreren den Bedienerplatz (4) tragenden Zylindern (10), denen ein Speicherelement (12) mit einstellbarem Vorspanndruck vorgeschaltet ist,
**gekennzeichnet durch**
eine einstellbare Drossel (14) in der Fluidleitung zwischen Zylinder (10) und Speicherelement (12), wobei der Zylinder (10), das Speicherelement (12) und die einstellbare Drossel (14) ein Feder-Masse-Dämpfungssystem bilden, das **durch** Einstellen der Drossel an unterschiedliche Bedienergewichte angepasst werden kann, und eine aktive Regelung der Feder- und/oder Dämpfungseigenschaften.

2. Gabelstapler nach Anspruch 1,
**gekennzeichnet durch**
Führungselemente (6), die eine Auf- und Abbewegung des Bedienerplatzes (4) erlauben.

## Claims

1. Forklift truck, having a chassis (2) and an operator's station (4) arranged thereon, having one or more pneumatic or hydropneumatic spring elements (8), having one or more cylinders (10) which carry the operator's station (4) and connected in series with which is an accumulator element (12) with adjustable precharge pressure, **characterized by** an adjustable restrictor (14) in the fluid line between cylinder (10) and accumulator element (12), wherein the cylinder (10), the accumulator element (12) and the adjustable restrictor (14) form a spring-mass damping system which can be adapted to different operator weights by adjusting the restrictor, and active control of the spring and/or damping properties.

2. Forklift truck according to Claim 1, **characterized by** guide elements (6) which permit an up and down movement of the operator's station (4).

## Revendications

1. Chariot élévateur à fourche, comprenant un châssis (2) et un poste d'opérateur (4) monté sur celui-ci, comprenant un ou plusieurs éléments ressorts (8) pneumatiques ou hydropneumatiques, comprenant un ou plusieurs vérins (10) supportant le poste d'opérateur (4) en amont desquels est monté un élément accumulateur (12) avec une pression de précontrainte réglable, **caractérisé par** un étrangleur (14) réglable dans la conduite à fluide entre le vérin (10) et l'élément accumulateur (12) dans lequel le vérin (10), l'élément accumulateur (12) et l'étrangleur (14) réglable forment un système amortisseur de masse à ressort qui peut être adapté aux différents poids d'opérateur en réglant l'étrangleur, et par une régulation active des propriétés de ressort et/ou d'amortissement.

2. Chariot élévateur à fourche selon la revendication 1, **caractérisé par** des éléments de guidage (6) qui permettent un mouvement ascendant et descendant du poste d'opérateur (4).
